# EUROPEAN PATENT SPECIFICATION

(11) **EP 0 625 252 B1**
(45) Date of publication and mention of the grant of the patent: **08.07.1998**
(21) Application number: 94900967.4
(22) Date of filing: 02.12.1993
(51) Int. Cl.: F16L 23/024, F16L 37/14

(54) **PIPE COUPLING**
ROHRVERBINDUNG
RACCORD DE CONDUITS

(30) Priority: 08.12.1992 GB 9225658; 18.02.1993 GB 9303281
(43) Date of publication of application: 23.11.1994
(73) Proprietor: Royal Ordnance plc, Euxton Chorley Lancashire PR7 6AD (GB)
(72) Inventor: Bond, Alexander, Edwin, Oxon SN7 7EH (GB); Eckold, Geoffrey, Charles, Wantage, Oxon OX12 8JS (GB); Millward, Wiliam, Anthony, Hereford, Worcester DY11 5DR (GB); Marsh, Stuart, David, Bucks HP20 1PX (GB)
(74) Representative: Wildman, David Brian
(86) International application number: GB9302484
(87) International publication number: WO9413993

(56) References cited:
- EP-A- 0 104 697
- EP-A- 0 462 672
- CH-A- 476 219

## Description

The present invention relates to a method of attaching a coupling member to the end of a pipe particularly to the end of a composite construction pipe formed from a plurality of helically wound reinforcement strips embedded in a resin matrix.

In our co-pending international patent application number PCT/GB93/02483 of common filing date herewith, we describe a pipe construction comprising a plurality of layers of steel strip which are helically wound to form a pipe and embedded in a resin matrix, the pipe further including inner and outer linings of filament wound fibre reinforced plastic. In order to utilise these pipes, it is necessary to be able to join together separate lengths or to join pipe lengths to plant. Conventional pipe joining techniques are not directly applicable either to pipe constructed as described or to the medium to high pressure applications which are envisaged.

According to a first aspect of the present invention there is provided a method of joining a coupling member to the end of a pipe, the method comprising the steps of forming at least one generally circumferentially directed groove in the surface of the pipe wall adjacent the end of the pipe; providing a coupling member adapted to fit the end of the pipe and overlapping the region of the groove; providing key means to extend between said coupling member and said pipe and into said groove; the method being characterised by providing curable resin in the joint area between the pipe and said coupling member; and curing said curable resin to bond said coupling member to said pipe end, and wherein the pipe is of composite construction comprising a core formed from a plurality of layers of helically wound reinforcing strip embedded in a resin matrix, and the depth of the said groove penetrates the rcinforcing core of the pipe.

Preferably the pipe has an internal and/or external lining of fibre reinforced plastic.

Preferably the reinforcing strip is of steel, and the coupling member and the key means are preferably also of steel or other material having similar mechanical properties.

The resin may be injected into the joint area after fitting the coupling member, and/or may De coated onto the joint mating faces prior to fitting.

In one embodiment, the coupling member may be of tubular construction having a circumferentially directed groove or grooves formed in the inner surface thereof and which are axially coincident with the at least one groove on the pipe. The sleeve may be provided with a tangential slot extending through the wall thickness to enable a flexible key member to be inserted into the two axially coincident grooves to extend therebetween.

The cooperating groove and key means mav be cooperating screw threads.

In another embodiment of the pipe joint of the present invention, the coupling member may be provided in the form of a sleeve axially split into two halves. Each half may have formed in the inner cylindrical surface thereof a groove or grooves which are axially coincident with the at least one groove in the outer surface of the pipe wall. Separate key members of circular split-ring or part circular form may be provided which extend between both grooves and mechanically lock the pipe and the sleeve together in the axial direction. Alternatively, the sleeve halves may be provided with one or more integral, upstanding, radially inwardly directed key members which extend into the groove or grooves in the pipe.

In a further alternative construction, the key members may be provided by placing separate kev members into the grooves in the pipe end and bonding and sealing these in place prior to fitting of the coupling member which has cooperating grooves. An advantage of this construction is that a finished and protected pipe unit may be supplied by a manufacturer.

The two halves of the coupling member may be positively engaged by an internally tapered collar member push fitted over the sleeve halves. The collar member may be removable or permanently connected to the sleeve member by means of injected curable resin for example.

Other means of maintaining the two halves of a split coupling member together may be employed, and may comprise various forms of clamps, either permanent or temporary depending upon the application in addition to adhesive bonding.

By the method of the present invention, the pipe and its coupling member are permanently joined together by a combination of mechanical and adhesive means. Preferably the at least one groove extends into, but does not extend more than halfway through the total thickness of the reinforcing core. This will however vary depending upon the pipe diameter and the anticipated loading. The load transfer from the pipe to the coupling member is therefore transmitted by a combination of the adhesive bond strength, and mechanically transmitted load which is based on the interlaminar shear strength of the pipe construction itself. An advantage of the method of the present invention is that the efficiency of the adhesively bonded joint is improved by splitting it up into two or more shorter lengths by the key means and the grooves in the pipe end and/or coupling member, thus reducing the high tensile adhesive stress concentrations at the joint ends.

Analysis has shown that the efficiency of adhesively bonded joints is improved by reducing stiffness in the joint area enabling stresses to be more evenly distributed, which in turn reduces the stress peaks. In a joint formed in accordance with the present invention, a degree of additional flexibility is imparted to the pipe end and/or coupling member by the grooves which thus help to reduce the stress concentrations on each end of the joint. We have also found that the efficiency of the joint may be further enhanced by the use of geometrical features on the pipe end and/or coupling member. Preferably, the pipe end or coupling member or both may have a tapered portion over at least a part of the axial strength ofthe joint. The effect of such tapers is to further reduce stiffness in the joint area which further reduces the stress peaks. Desirably also, where more than groove is provided, the key members are of a material, eg ductile steel, which provides some resilience in the axial shear direction whereby to permit a more even distribution of axial mechanical loads between them.

The groove and key member combination serves not only to provide a mechanical locking means in the axial direction, but also to divide the total joint area into separate sections. The effect of this division of the joint area is to reduce peak stresses, reduce total stress within the joint and to provide a more even stress distribution in the joint. The consequence of this is to produce a joint having a higher load capability for a given bond length.

The coupling member may have similar features at its remote end to enable the joining together of two pipe lengths in a substantially identical fashion, or the coupling member may be provided with other joining means at its remote end. Such other joining means may comprise, for example, boltable flanges, weldable joints, screw threads, clamping or other locking devices.

Where there are two or more grooves provided in the outer surface of the pipe, these may be provided in stepped manner by providing the grooves at the junctions between or in pipe portions having successively reduced diameters.

The curable resin may be an epoxy resin or any other suitable for the application.

According to a second aspect of the present invention there is provided the combination of a coupling member and a pipe, wherein at least one circumferentially directed groove is formed in the surface of the pipe wall adjacent the end of the pipe, the coupling member is fitted to the end of the pipe and overlaps the region of the groove, and key means extend between said coupling member and said pipe and into said groove, characterised in that
- a cured resin is provided in the joint area between the pipe and the coupling member so as to bond said coupling member to said pipe end,
- the pipe is of composite construction comprising a core formed from a plurality of layers of helically wound reinforcing strip embedded in a resin matrix, and
- the depth of the said groove penetrates the reinforcing core of the pipe.

Advantageously the coupling member comprises a generally tubular body portion having key means extending radially from the surface thereof, said key means being adapted to engage with generally circumferentially extending grooves formed in a cylindrical surface of the said pipe end.

There may also be provided at the junction between the pipe and the coupling member sealing means to protect the exposed end of the pipe from corrosion. Such sealing means may take the form of resin seals or separate polymeric plastics material seals as an additional member in the pipe joint construction.

The radially inwardly extending key means may be formed integrally with the bore of the coupling member or may be separate key members adapted to fit into grooves formed in the bore of the coupling member.

In order that the present invention may be more fully understood, examples will now be described by way of illustration only with reference to the accompanying drawings, of which:
Figure 1 shows an axial cross section through the end of a pipe joined to a coupling member;
Figure 2 shows an enlarged axial cross section through part of the joint shown in Fig. 1;
Figure 3 shows a perspective view of a pipe end and a second embodiment of a coupling member prior to joining;
Figure 4 shows a radial cross section through the joined pipe and coupling member indicated by the line 4-4 of Fig. 3;
Figure 5 shows a perspective view of a third embodiment of a coupling member;
Figure 6 shows a partial axial cross section through a fourth embodiment of a joint between a pipe and a coupling member;
Figure 7 shows a further embodiment of a pipe coupling according to the present invention, and
Figures 8 to 10 which show sections through pipes joined together in various ways having sealing means disposed between the exposed ends of the pipe portions.

Referring now to the drawings and where the same features are denoted by common reference numerals

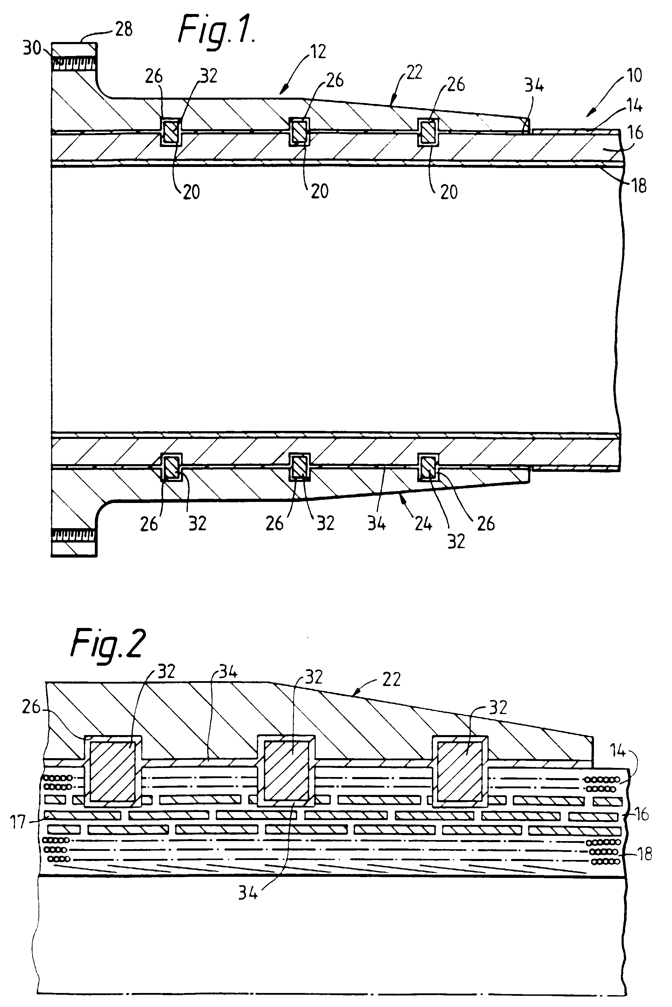

Figures 1 and 2 show an end of a pipe 10 having a coupling member 12 bonded thereto. The pipe 10 comprises an outer layer 14 of a filament wound, fibre reinforced resin material, a core layer 16 of a plurality of helically wound steel strips embedded in a resin matrix and an inner layer 18 of a filament wound, fibre reinforced resin material. The pipe 10 has the outer layer 14 removed to substantially the same axial extent as that of the coupling member 12. Three circumferential grooves 20 are cut in the outer surface of the pipe and extend into the core layer 16. The coupling member 12 is axially split into two halves 22, 24 and each half has grooves 26 formed in the bore thereof which are axially coincident with the grooves 20 in the pipe. The coupling member 12 is also provided with a flange member 28 having bolt holes 30 tor joining to other pipe sections (not shown) or to plant (not shown). Semi-circular key members 32 are inserted into and extend beyond the grooves 20 and 26 to mechanically lock the pipe and coupling member together in the axial direction. A curable resin 34 is injected into the gap between the pipe end surface and the bore of the coupling member. The resin is cured and adhesively bonds the pipe and coupling member together and also surrounds the key members 32. In effect, the adhesive joint between the two cylindrical surfaces of the pipe outer diameter and the coupling member bore is divided into four distinct bands which improves the efficiency of the bonded joint by reducing stress concentrations at the remote ends of the joint.

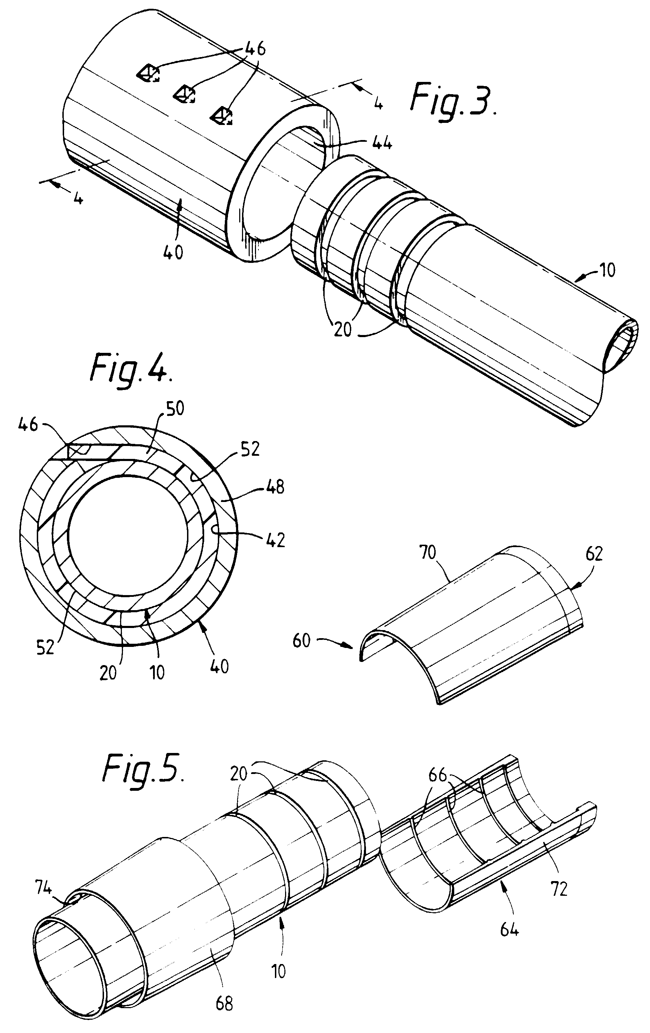

Figures 3 and 4 show a second embodiment of a joint between a pipe 10 and a coupling member 40. The pipe has a similar construction to that described with reference to Figures 1 and 2 and has three grooves 20 cut in the end. The coupling member 40 has three axially coincident grooves 42 cut into the bore 44, each groove 42 having a tangential entry slot 46 cut through the tubular wall 48 of the coupling member. The pipe 10 is inserted into the coupling member 40 so that the grooves 20 and 42 are coincident and flexible key members 50 are inserted into the slots 46 to extend around and between the grooves 20, 42. With the pipe and coupling member axially locked together by the key members 50, a resin 52 is injected into the joint gap and is cured to adhesively bond the pipe, coupling member and key members together The coupling member may be provided with any suitable means at its remote end for joining the pipe section to another pipe section or to plant.

Figure 5 shows a perspective view of a third embodiment of a coupling member 60 and pipe 10. As before with reference to Figures 1 and 2, the coupling member 60 comprises two halves 62, 64 and has grooves 66 to cooperate with grooves 20 in the pipe 10. However, in this embodiment, the coupling member 60 further includes a collar member 68 to lock the two halves 62, 64 together. The outer surfaces 70, 72 of the coupling member halves and the bore 74 of the collar member 68 have cooperating tapers. Semi-circular key members (not shown) extend between the grooves 20 and 66. As in the previous embodiments, a curable resin is injected into the gap between the pipe and coupling member to adhesively bond them together. The coupling halves 62 64 and bore 74 of the collar member may be provided with suitable channels and recesses (not shown) such that the injected resin also bonds the collar to the outside of the coupling member halves.

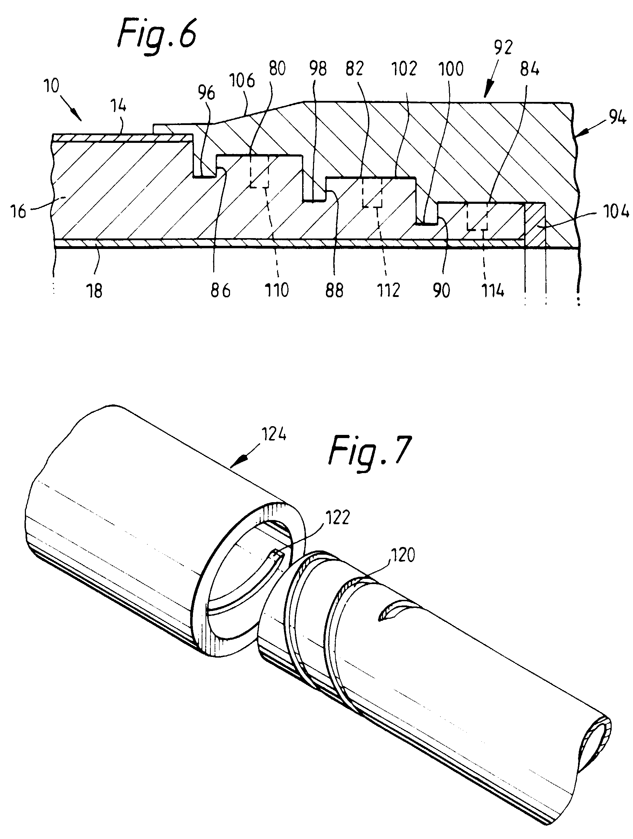

Figure 6 shows a cross section through a fourth embodiment of a joint according to the present invention. In this embodiment however, the end of the pipe 10 is formed with three different diameter portions 80, 82, 84, there being circumferential grooves 86, 88, 90 provided at the junctions between each diameter and extending into the core portion of the pipe. The coupling member 92 (shown in part only) is in two halves (only 94 shown in part), and, instead of grooves to receive separate key members, has three upstanding, radially directed key members 96, 98, 100 formed integrally in the bore. As before, a curable resin 102 is injected into the gap between the pipe and coupling member to adhesively bond them together. The injected resin 102 also forms a seal 104 on the exposed end of the pipe 16. The coupling member 92 is also provided with a tapered portion 106.

In a modification of the embodiment shown in Fig. 6 the grooves 86, 88 and 90 may be formed within the area of each reduced diameter portion as shown by dashed lines 110, 112 and 114. These alternative groove positions have corresponding groove positions in the coupling member 92.

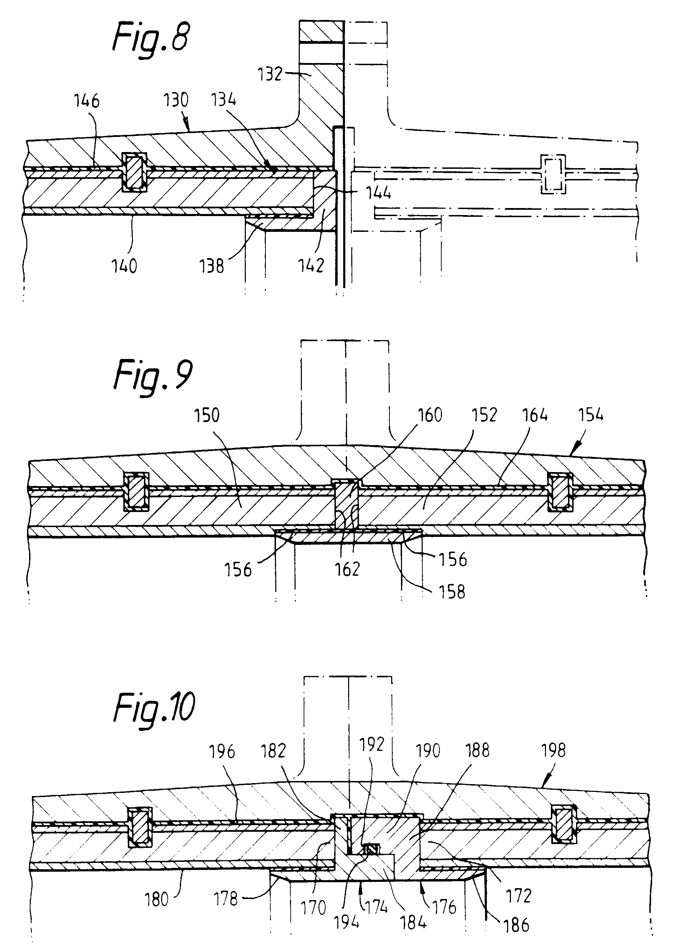

Figure 7 shows an embodiment where the cooperating grooves and key members are constituted by helicallv formed screw threads 120, 122. The pipe end has a helical groove 120 Formed in the end whilst the coupling member 124 has an upstanding helical screw thread 122 formed in the bore thereof. The mechanical coupling between the pipes is augmented by a resin injected into the joint area between the components to provide an adhesive bond.

Figures 8 to 10 show embodiments having different means of sealing the exposed ends of the pipe Figure 8 shows a coupling member 130 having a flange feature 132 mating with a similar feature of another coupling shown only in dashed lines. Prior to fitting of the coupling member 130 to the pipe end 134, a soft polymeric plastics material seal member 136 is bonded to the end of the pipe. The seal member 136 has an axial ring portion 138 which is bonded to the pipe bore 140, and a radial ring portion 142 which is bonded to the pipe end 144 Pulling the flanges 132 together on tightening of two complementary coupling members causes the seal members to engage and seal together and also prevent access to the exposea pipe and tace 144. As in previous embodiments, there is a resin adhesive 146 injected into the joint area between the coupling member and the pipe end.

Figure 9 shows a joint between two pipe ends 150, 152 connected by a single coupling member 154 comprising two axially split halves (not shown). Prior to fitting the coupling member, the pipe ends are provided with rebates 156 into which is fitted a GRP ring member 158 which is bonded thereto. A compressible polymeric seal 160 is positioned between the pipe ends to protect the exposed end faces 162 of the pipe ends. After fitting of the coupling member 154, a resin 164 is injected into the joint area to seal the assembly and to adhesively bond the components together.

Figure 10 shows an assembly similar to that of Fig. 9, but where the seal means comprises three separate members. Two mating pipe ends 170, 172 are each provided with seal member portions 174, 176. Seal member portion 174 has an axially directed flange portion 178 which is bonded to the bore 180 of the pipe end 170, and a radially directed portion 182 having a flange 184 The seal member portion 176 has an axially directed portion 186 bonded to the bore of the pipe end 172, and a radially directed portion 188 having a flange 190 which has a circumferential groove 192 in the inner diameter thereof. The flanges 184 and 190 cooperate to form a seal with the aid of an "O" ring 194 in the groove 192. A resin 196 is injected into the joint area to adhesively bond the coupling member 198 to the pipe ends 170, 172.

It will be appreciated that the integrally formed key members of Figure 6 may be replaced with separate key members as shown in other embodiments, and similarly for example, the separate kev members shown in Figures I and 5 could be replaced with key members formed integrally with the coupling member halves

It is pointed out that although the invention has been described with reference to the bonding of a coupling member to a particular form of composite construction pipe, the method is equally applicable to other similar forms of pipe construction. For example, the inner and outer layers of filament wound fibre reinforced material may either be absent or mav comprise layers of woven fibre or chopped strand mat.

## Claims

1. A method of joining a coupling member (12) to the end of a pipe (10), the method comprising the steps of forming at least one generally circumferentially directed groove (20) in the surface of the pipe wall adjacent the end of the pipe; providing a coupling member adapted to fit the end of the pipe and overlapping the region of the groove; providing key means (32) to extend between said coupling member and said pipe and into said groove; the method being characterised by additionally providing curable resin (34) in the joint area between the pipe and said coupling member; and curing said curable resin to bond said coupling member to said pipe end, and wherein the pipe is of composite construction comprising a core (16) formed from a plurality of layers of helically wound reinforcing strip (17) embedded in a resin matrix, and the depth of the said groove penetrates the reinforcing core (16) of the pipe.

2. A method according to Claim 1, wherein the pipe has an internal (18) and/or external (14) lining of fibre reinforced plastic

3. A method according to Claim 1 or Claim 2, wherein the reinforcing strip is steel and the key means and coupling member are of the same material or other material having similar mechanical properties.

4. A method according to any one preceding claims wherein said resin may be injected into the joint area between the pipe and the coupling member after fitting of said coupling member to said pipe end.

5. A method according to any one preceding claim wherein the mating faces between said coupling member and said pipe end may be coated with resin prior to fitting.

6. A method according to any one preceding claim wherein said coupling member is of generally tubular (40; 124) construction.

7. A method according to claim 6 wherein said generally tubular coupling member surrounds the end of the pipe and is provided with a tangential slot (46) through the wall thickness, said slot co-operating with a circumferentially extending groove (42) in the coupling member and which groove accepts a key member (50) inserted through said slot to engage with two axially coincident grooves (42; 20) in said coupling member and said pipe.

8. A method according to claim 6 wherein said cooperating groove (120) and key means (122) are cooperating screw threads.

9. A method according to any one of preceding claims 1 to 5 wherein said coupling member (60) is in the form of a sleeve axially split into two halves (62, 64).

10. A method according to claim 9 wherein said two halves have one or more grooves (66) axially coincident with one or more grooves (20) in said pipe end.

11. A method according to either claim 9 or claim 10 wherein there are separate key members adapted to extend between the groove or grooves in said coupling member and said pipe.

12. A method according to claim 9 wherein said axially split halves have upstanding, radially inwardly directed key members.

13. A method according to claim 9 wherein said pipe end is provided with separate upstanding key members which are bonded and scaled into one or more groove in said pipe end prior to fitting of said coupling member.

14. A method according to any one of preceding claims 9 to 13 wherein said coupling member halves (62, 64) are positively engaged by an outer collar member (68) fitted over the halves.

15. A method according to any one presenting claim wherein said coupling member has at least a portion having a cross section which is tapered away from said pipe end.

16. A method according to any one preceding claim wherein at least a portion of said pipe end is tapered towards its open end.

17. A method according to claim 16 wherein said taper is in the form of progressively stepped portions (80, 82, 84) having different diameters.

18. A method according to any one preceding claim wherein said coupling member is provided with connecting means to enable it to be connected to other coupling members or other pipes or to plant.

19. A method according to any one preceding claim further including the fitting of sealing means adjacent the axial free end of said pipe end.

20. The combination of a coupling member (12) and a pipe (10), wherein at least one circumferentially directed groove (20) is formed in the surface of the pipe wall adjacent to the end of the pipe, the coupling member is fitted to the end of the pipe and overlaps the region of the groove (20), and key means (26) extend between said coupling member and said pipe and into said groove, characterised in that
- a cured resin (34) is additionally provided in the joint area between the pipe and the coupling member so as to bond said coupling member to said pipe end,
- the pipe is of composite construction comprising a core (16) formed from a plural of layers of helically wound reinforcing strip (17) embedded in a resin matrix, and
- the depth of the said groove penetrates the reinforcing core (16) of the pipe.

21. A combination according to Claim 1, wherein the coupling member comprises a generally tubular body portion having key means (32; 50; 96; 98; 100; 122) extending radially from the surface thereof, said key means being adapted to engage with generally circumferentially extending grooves (20; 86, 88, 90; 122) formed in a cylindrical surface of a the said pipe end.

22. A combination according to claim 21, characterised in that the key means extend radially inwards from the bore of the tubular body portion and engage within the generally circumferentially extending groove in the outer cylindrical surface of the pipe end.

23. A combination according to claim 21 or claim 22 characterised in that said generally tubular body portion is axially split into two halves.

24. A combination according to any one of claims 21, 22 or 23 characterised in that said key means are formed integrally with the surface of the generally tubular body portion.

25. A combination according to any one of claims 21, 22 or 23 characterised in that said key means are formed separately from said body portion.

## Patentansprüche

1. Verfahren zum Verbinden eines Kupplungsteils (12) mit dem Ende eines Rohres (10), wobei das Verfahren die Schritte aufweist, in der Oberfläche der Rohrwand angrenzend an das Rohrende mindestens eine etwa umfangsmäßig verlaufende Nut (20) herzustellen, ein Kupplungsteil bereitzustellen, das auf das Rohrende paßt und den Bereich der Nut überlappt, Keilmittel (32) vorzusehen, die zwischen dem Kupplungsteil und dem Rohr verlaufen und in die Nut hineinragen, wobei das Verfahren dadurch gekennzeichnet ist, daß zusätzlich aushärtbares Harz (34) im Verbindungsbereich zwischen dem Rohr und dem Kupplungsteil vorgesehen wird, und daß das aushärtbare Harz zur Bindung des Kupplungsteils an dem Rohrende ausgehärtet wird, und wobei das Rohr aus einer Kompositkonstruktion mit einem Kern (16, der aus einer Mehrzahl von Schichten aus schraubenlinienförmig gewickelten Verstärkungsstreifen (17) gebildet ist, die in einer Harzmatrix eingebettet sind, und die Tiefe der Nut in den Verstärkungskern (16) des Rohr eindringt.

2. Verfahren nach Anspruch 1, wobei das Rohr eine innere (18) und/oder äußere (14) Auskleidung aus faserverstärktem Kunststoff aufweist.

3. Verfahren nach Anspruch 1 oder 2, wobei der Verstärkungsstreifen aus Stahl besteht und die Keilmittel und das Kupplungsteil aus dem gleichem Material oder anderem Material mit ähnlichen mechanischen Eigenschaften bestehen.

4. Verfahren nach einem der vorhergehenden Ansprüche, wobei das Harz in den Verbindungsbereich zwischen dem Rohr und dem Kupplungsteil nach Aufsetzen des Kupplungsteils auf das Rohrende eingespritzt wird.

5. Verfahren nach einem der vorhergehenden Ansprüche, wobei die Paßflächen zwischen dem Kupplungsteil und dem Rohrende vor dem Zusammensetzen mit Harz beschichtet werden.

6. Verfahren nach einem der vorhergehenden Ansprüche, wobei das Kupplungsteil eine etwa rohrartige (40, 124) Konstruktion aufweist.

7. Verfahren nach Anspruch 6, wobei das etwa rohrförmige Kupplungsteil das Rohrende umschließt und mit einem tangentialen Schlitz (46) durch die Wanddicke versehen ist, der mit einer umfangsmäßig verlaufenden Nut (42) in dem Kupplungsteil zusammenwirkt, die ein durch den Schlitz eingeführtes Keilelement (50) aufnimmt, um mit zwei axial sich deckenden Nuten (42, 20) im Kupplungsteil und im Rohr einzugreifen.

8. Verfahren nach Anspruch 6, wobei die zusammenwirkende Nut (120) und das Keilelement (122) miteinander zusammenwirkende Schraubengewinde sind.

9. Verfahren nach einem der Ansprüche 1 bis 5, wobei das Kupplungsteil (60) die Form einer axial in zwei Hälften (62, 64) geteilten Hülse hat.

10. Verfahren nach Anspruch 9, wobei die beiden Hälften eine oder mehr Nuten (66) aufweisen, die axial mit einer oder mehr Nuten (20) im Rohrende in Deckung angeordnet sind.

11. Verfahren nach Anspruch 9 oder 10, wobei getrennte Teilelemente vorgesehen sind, die zwischen der Nut bzw. der Nuten in dem Kupplungsteil und dem Rohr verlaufen.

12. Verfahren nach Anspruch 9, wobei die axial geteilten Hälften aufstehende, radial einwärts verlaufende Keilelemente aufweisen.

13. Verfahren nach Anspruch 9, wobei das Rohrende mit getrennten aufstehenden Keilelementen versehen ist, die vor dem Aufsetzen des Kupplungsteils in eine oder mehr Nuten des Rohrendes eingebunden und eingedichtet werden.

14. Verfahren nach einem der Ansprüche 9 bis 13, wobei die Kupplungsteilhälften (62, 64) von einer äußeren Muffe (65), die über die Hälften geschoben ist, formschlüssig ergriffen werden.

15. Verfahren nach einem der vorhergehenden Ansprüche, wobei das Kupplungsteil mindestens einen Abschnitt aufweist, dessen Querschnitt vom Rohrende weg verjüngt ist.

16. Verfahren nach einem der vorhergehenden Abschnitte, wobei mindestens ein Teil des Rohrendes zu seinem offenen Ende hin verjüngt ist.

17. Verfahren nach Anspruch 16, wobei die Verjüngung in Form fortschreitend abgestufte (80, 82, 84) mit unterschiedlichen Durchmessern gebildet ist.

18. Verfahren nach einem der vorhergehenden Ansprüche, wobei das Kupplungsteil mit Verbindungsmitteln versehen ist, und es mit weiteren Kupplungsteilen oder anderen Rohren oder einer Anlage verbindbar zu machen.

19. Verfahren nach einem der vorhergehenden Ansprüche, das weiter das Anbringen von Dichtungsmitteln an dem axialen freien Ende des Rohrendes umfaßt.

20. Kombination eines Kupplungsteils (12) und eines Rohr (10), wobei mindestens eine umfangsmäßig verlaufende Nut (20) in die Oberfläche der Rohrwand angrenzend an das Rohrende eingearbeitet ist, das Kupplungsteil auf das Rohrende aufgesetzt ist und den Bereich der Nut (20) überlappt, und Keilmittel (20) zwischen dem Kupplungsteil und dem Rohr verlaufen und in die Nut hineinragen, dadurch gekennzeichnet, daß
- ein ausgehärtetes Harz (34) zusätzlich in dem Verbindungsbereich zwischen dem Rohr und dem Kupplungsteil vorgesehen ist, um eine Bindung zwischen dem Kupplungsteil und dem Rohrende herzustellen,
- das Rohr eine Kompositkonstruktion mit einem Kern (16) aufweist, der aus einer Mehrzahl von Schichten aus einem schraubenlinienförmig gewickelten Verstärkungsstreifen (17) besteht, der in eine Harzmatrix eingebettet ist, und
- die Tiefe der Nut in den Verstärkungskern (16) des Rohr eindringt.

21. Kombination nach Anspruch 1, wobei das Kupplungsteil einen etwa rohrförmigen Körperteil mit Keilmitteln (32, 50, 96, 98, 100, 122) aufweist, der radial von dessen Oberfläche wegragt, wobei die Keilmittel so ausgelegt sind, daß sie in etwa umfangsmäßig verlaufende Nuten (20, 86, 88, 90, 122) in einer zylindrischen Fläche des genannten Rohrendes eingereifen.

22. Kombination nach Anspruch 21, dadurch gekennzeichnet, daß die Keilmittel von der Bohrung des rohrförmigen Körperteils radial einwärts ragen und in die etwa umfangsmäßig verlaufende Nut in die zylindrische Außenfläche des Rohrendes eingreifen.

23. Kombination nach Anspruch 21 oder 22, dadurch gekennzeichnet, daß der etwa rohrförmige Körperteil axial in zwei Hälften geteilt ist.

24. Kombination nach einem der Ansprüche 21, 22, oder 23, dadurch gekennzeichnet, daß die Keilmittel einstückig mit der Oberfläche des etwa rohrförmigen Körperteils ausgebildet sind.

25. Kombination nach einem der Ansprüche 21, 22 oder 23, dadurch gekennzeichnet, daß die Keilmittel getrennt von dem Körperteil ausgebildet sind.

## Revendications

1. Procédé de raccordement d'un organe (12) d'accouplement à l'extrémité d'un tube (10), le procédé comprenant les étapes suivantes : la formation d'au moins une gorge (20) de direction générale circonférentielle à la surface de la paroi du tube qui est adjacente à l'extrémité du tube, la disposition d'un organe d'accouplement destiné à s'ajuster sur l'extrémité du tube et à recouvrir la région de la gorge, la disposition d'un dispositif à clavette (32) afin qu'il soit disposé entre l'organe d'accouplement et le tube et dans la gorge, le procédé étant caractérisé en ce qu'il comporte en outre la disposition d'une résine durcissable (34) dans la région du raccord entre le tube et l'organe d'accouplement, et le durcissement de la résine durcissable afin que l'organe d'accouplement et l'extrémité du tube soient liés, et le tube a une construction composite comprenant une âme (16) formée de plusieurs couches d'une bande d'armature enroulées en hélice (17) et enrobées dans un liant résineux, et la profondeur de la gorge est telle qu'elle pénètre dans l'âme d'armature (16) du tube.

2. Procédé selon la revendication 1, dans lequel le tube a un revêtement interne (18) et/ou externe (14) de matière plastique armée de fibres.

3. Procédé selon la revendication 1 ou 2, dans lequel la bande d'armature est formée d'acier et le dispositif à clavette et l'organe d'accouplement sont formés du même matériau ou d'un autre matériau ayant des propriétés mécaniques analogues.

4. Procédé selon l'une quelconque des revendications précédentes, dans lequel la résine peut être injectée dans la région du raccord formée entre le tube et l'organe d'accouplement après le montage de l'organe d'accouplement sur l'extrémité du tube.

5. Procédé selon l'une quelconque des revendications précédentes, dans lequel les faces coopérantes de l'organe d'accouplement et de l'extrémité du tube peuvent être revêtues d'une résine avant le montage.

6. Procédé selon l'une quelconque des revendications précédentes, dans lequel l'organe d'accouplement a une construction générale tubulaire (40 ; 124).

7. Procédé selon la revendication 6, dans lequel l'organe d'accouplement de forme générale tubulaire entoure l'extrémité du tube et possède une fente tangentielle (46) formée dans l'épaisseur de la paroi, la fente coopérant avec une gorge (42) qui s'étend circonférentiellement dans l'organe d'accouplement, la gorge logeant un organe à clavette (50) introduit par la fente afin qu'il coopère avec deux gorges qui coïncident axialement (42 ; 20) formées dans l'organe d'accouplement et dans le tube.

8. Procédé selon la revendication 6, dans lequel la gorge coopérante (120) et le dispositif à clavette (122) sont des filets coopérants.

9. Procédé selon l'une quelconque des revendications précédentes 1 à 5, dans lequel l'organe d'accouplement (60) est sous forme d'un manchon divisé axialement en deux moitiés (62, 64).

10. Procédé selon la revendication 9, dans lequel les deux moitiés ont une ou plusieurs gorges (66) qui coïncident axialement avec une ou plusieurs gorges (20) formées à l'extrémité du tube.

11. Procédé selon la revendication 9 ou 10, dans lequel il existe des organes séparés à clavette destinés à être disposés entre la gorge ou les gorges de l'organe d'accouplement et le tube.

12. Procédé selon la revendication 9, dans lequel les moitiés divisées axialement ont des organes à clavette perpendiculaires dirigés radialement vers l'intérieur.

13. Procédé selon la revendication 9, dans lequel l'extrémité du tube a des organes perpendiculaires séparés à clavette qui sont collés et scellés dans une ou plusieurs gorges de l'extrémité du tube avant le montage de l'organe d'accouplement.

14. Procédé selon l'une quelconque des revendications précédentes 9 à 13, dans lequel les moitiés (62, 64) de l'organe d'accouplement coopèrent positivement avec un organe de collier externe (68) monté sur les moitiés.

15. Procédé selon l'une quelconque des revendications précédentes, dans lequel l'organe d'accouplement a au moins une partie dont la section varie progressivement depuis l'extrémité du tube.

16. Procédé selon l'une quelconque des revendications précédentes, dans lequel une partie au moins de l'extrémité du tube a une dimension qui varie progressivement vers son extrémité ouverte.

17. Procédé selon la revendication 16, dans lequel la partie qui varie progressivement est sous forme de parties de gradin variant progressivement (80, 82, 84) ayant des diamètres différents.

18. Procédé selon l'une quelconque des revendications précédentes, dans lequel l'organe d'accouplement a un dispositif de connexion destiné à lui permettre d'être connecté à d'autres organes d'accouplement ou d'autres tubes ou à une installation.

19. Procédé selon l'une quelconque des revendications précédentes, comprenant en outre le montage d'un dispositif d'étanchéité près de l'extrémité axiale libre de l'extrémité du tube.

20. Combinaison d'un organe d'accouplement (12) et d'un tube (10), dans laquelle une gorge dirigée circonférentiellement au moins (20) est formée à la surface de la paroi du tube près de l'extrémité du tube, l'organe d'accouplement est monté sur l'extrémité du tube et recouvre la région de la gorge (20), et un dispositif à clavette (26) s'étend entre l'organe d'accouplement et le tube et dans la gorge, caractérisée en ce que :
- une résine durcie (34) est disposée en outre dans la région du raccord entre le tube et l'organe d'accouplement afin que l'organe d'accouplement soit lié à l'extrémité du tube,
- le tube a une construction composite comprenant une âme (16) formée de plusieurs couches d'une bande d'armature enroulée en hélice (17) enrobée dans un liant de résine, et
- la profondeur de la gorge est telle qu'elle pénètre dans l'âme d'armature (16) du tube.

21. Combinaison selon la revendication 1, dans laquelle l'organe d'accouplement comprend une partie de corps de forme générale tubulaire ayant un dispositif à clavette (32 ; 50 ; 96 ; 98 ; 100 ; 122) s'étendant radialement depuis la surface, le dispositif à clavette étant destiné à coopérer avec des gorges (20 ; 86, 88, 90 ; 122) qui s'étendent en direction générale circonférentielle et qui sont formées dans une surface cylindrique de l'extrémité du tube.

22. Combinaison selon la revendication 21, caractérisée en ce que le dispositif à clavette s'étend radialement vers l'intérieur depuis l'âme de la partie de corps tubulaire et coopère avec une gorge qui s'étend en direction générale circonférentielle à la surface cylindrique externe de l'extrémité du tube.

23. Combinaison selon la revendication 21 ou 22, caractérisée en ce que la partie de corps de forme générale tubulaire est divisée axialement en deux moitiés.

24. Combinaison selon l'une quelconque des revendications 21, 22 et 23, caractérisée en ce que le dispositif à clavette est formé afin qu'il soit solidaire de la surface de la partie de corps de forme générale tubulaire.

25. Combinaison selon l'une quelconque des revendications 21, 22 et 23, caractérisée en ce que le dispositif à clavette est formé séparément de la partie de corps.
